# EUROPÄISCHE PATENTSCHRIFT

(11) **EP 1 536 960 B1**
(45) Veröffentlichungstag und Bekanntmachung des Hinweises auf die Patenterteilung: **12.04.2006**
(21) Anmeldenummer: 03756437.4
(22) Anmeldetag: 12.09.2003
(51) Int. Cl.: B60G 21/055

(54) **ANTRIEBSEINHEIT FÜR EINEN KRAFTFAHRZEUGACHSSTABILISATOR**
DRIVE UNIT FOR A MOTOR VEHICLE STABILIZER
UNITE D'ENTRAINEMENT POUR STABILISATEUR D'ESSIEU DE VEHICULE AUTOMOBILE

(30) Priorität: 13.09.2002 DE 10242724
(43) Veröffentlichungstag der Anmeldung: 08.06.2005
(73) Patentinhaber: ZF Lemförder Metallwaren AG, 49448 Lemförde (DE)
(72) Erfinder: ERSOY, Metin, 65396 Walluf (DE)
(86) Internationale Anmeldenummer: PCT/DE2003/003047
(87) Internationale Veröffentlichungsnummer: WO 2004/026601

(56) Entgegenhaltungen:
- DE-A- 10 037 486
- GB-A- 518 238
- US-A- 3 198 539

## Beschreibung

Die Erfindung betrifft eine hydraulische Antriebseinheit für die koaxiale Verdrehbewegung zweier Stabilisatorhälften eines Kraftfahrzeugachsstabilisators mit einem aus zwei Gehäusehälften bestehenden, rohrförmigen Gehäuse, in dessen Innern ein hydraulisch bewegbarer Betätigungskolben verschieblich zur Gehäuselängsachse angeordnet ist, wobei die Längsverschiebung mittels eines zwischengeschalteten Kurvengetriebes in eine Drehbewegung der Gehäusehälften um ihre gemeinsame Längsachse umgeformt wird und wobei die Gehäusehälften mit ihrem jeweiligen freien, einander abgewandten Ende an jeweils einer Stabilisatorhälfte festgelegt sind.

Achsstabilisatoren, für die die gattungsgemäße Antriebseinheit konzipiert ist, dienen allgemein dazu, bei Kurvenfahrten eines Kraftfahrzeuges auf Grund der Querbeschleunigung auftretende Wankbewegungen der Karosserie um die Fahrzeuglängsachse zu mindern oder ganz zu kompensieren. Die in der Regel zur selben Fahrzeugachse gehörenden Radträger sind dabei über einen geteilten Achsstabilisatorstab miteinander verbunden, wobei die Achsstabilisatorteile gleichzeitig drehbar am Fahrzeugaufbau über gesonderte Lagerelemente festgelegt sind. Die gegenüber liegenden nicht am Radträger festgelegten Enden der Stabilisatorhälften sind mittels eines zwischengeschalteten Drehantriebes gekoppelt. Die zwischen den beiden Stabilisatorhälften angeordnete Antriebseinheit als Bestandteil des Drehantriebes dient dabei zur Verdrehung der Achsstabilisatorenden gegeneinander, was gegebenenfalls die Wankstabilität des Fahrzeuges deutlich heraufsetzt.

Bei Einsatz derartiger hydraulischer Antriebseinheiten ist aus Sicherheitsaspekten zu gewährleisten, dass bei Ausfall des zugehörigen Hydraulikkreises oder bei Fehlern im elektrischen Kraftfahrzeugbordnetz keine unkontrollierte Verstellung des Drehantriebes und somit eine ungewollte Veränderung der Achsstabilisatoreigenschaften herbeigeführt wird. Zu diesem Zweck sind die aus dem Stand der Technik bekannten hydraulischen Antriebseinheiten mit kosten- und platzaufwändigen Druckspeichern nebst dazugehörigen Ventilsystemen ausgestattet.

Zum technischen Umfeld wird auf die DE-A-10 037 486 verwiesen

Wünschenswert ist darüber hinaus bei oben geschilderten Ausfällen der Hydraulik oder Elektrik des Kraftfahrzeuges eine automatische Verstellung des Drehantriebes in eine vordefinierte Neutralposition, in der die Achsstabilisatorbaugruppe eine mittlere Drehsteifigkeit aufweist.

Aufgabe der vorliegenden Erfindung ist es daher, eine Antriebseinheit der eingangs geschilderten gattungsgemäßen Art mit einer Sicherheitseinrichtung zu versehen, die im Falle eines Versagens des Systems auf einfache und kostengünstige Weise eine Festlegung der Stabilisatorverstellung in einer vordefinierten Neutrallage sicherstellt.

Diese Aufgabe wird zusammen mit den gattungsbildenden Merkmalen durch die im kennzeichnenden Teil des Anspruches 1 offenbarte technische Lehre gelöst.

Weitere Ausgestaltungen sind Gegenstand der sich anschließenden Unteransprüche.

An den gegenüberliegenden Flachseiten des Betätigungskolbens können jeweils gegen ein Federelement vorspannbare hydraulisch betätigte Freigabekolben angeordnet sind, wobei die jeweiligen Freigabekolben in vorgespannter Position die Verschiebebewegung des Betätigungskolbens ermöglichen und in entspannter Position den Betätigungskolben in seiner Mittenposition festlegen.

Die konstruktive Gestaltung ermöglicht eine Platz sparende Bauweise und dient dazu, die hydraulisch herbeigeführte Vorspannung des Freigabekolbens im Falle eines Ausfalls der Elektrik, Pneumatik oder des Hydrauliksystems für eine Längsverstellung des die Verdrehung der Stabilisatoranordnung bewirkenden Betätigungskolbens zu nutzen. Die Federkraft für die Verschiebung des Betätigungskolbens kann dabei vorteilhafterweise durch eine Luftfeder aufgebracht werden, darüber hinaus ist auch der Einsatz von Schraubenfedern auf Grund ihrer kompakten Abmessungen denkbar.

Entsprechend einer vorteilhaften Weiterbildung des Gegenstandes der Erfindung kann die Antriebseinheit eine hydraulische Antriebseinheit sein und ist es insbesondere im Hinblick auf kompakte Baumaße der gesamten Stabilisatorverstelleinheit vorteilhaft, wenn die Freigabekolben und der Betätigungskolben konzentrisch zur Längsachse der hydraulischen Antriebseinheit angeordnet sind.

Um unnötige Belastungen der für den Hydraulikkreislauf zuständigen Hydraulikpumpe zu vermeiden, kann es darüber hinaus zweckmäßig sein, die Steuerung der Freigabekolben und das Halten Letzterer in ihrer Vorspannposition durch ein elektrisch betätigtes Sitzventil zu realisieren. Wenn vorliegend von Hydraulik gesprochen wurde, so ist es selbstverständlich im Sinne der Erfindung auch möglich, andere Medien oder Energien (Pneumatik, Elektrik, etc.) zu nutzen, um das System oder Teile davon zu betreiben.

Im Folgenden wird ein Ausführungsbeispiel des Gegenstandes der Erfindung anhand der beigefügten Zeichnen näher erläutert.

Es zeigt:
- Figur 1: eine Halbschnittdarstellung durch eine hydraulische Antriebseinheit zur Verdrehung de Enden zweier Stabilisatorhälften eines Kfz- Achsstabilisators gegeneinander,
- Figur 2: eine Teilschnittdarstellung des Ausführungsbeispiels aus Figur 1 im Betriebszustand gegeneinander verdrehter Stabilisatorhälften,
- Figur 3: eine Teilschnittdarstellung des Ausführungsbeispiels der Figuren 1 und 2 in der Betriebsposition bei Ausfall des angeschlossenen Hydrauliknetzes und
- Figur 4: eine Teilschnittdarstellung durch eine weitere Ausführungsvariante ähnlich des Ausführungsbeispiels der Figuren 1 bis 3.

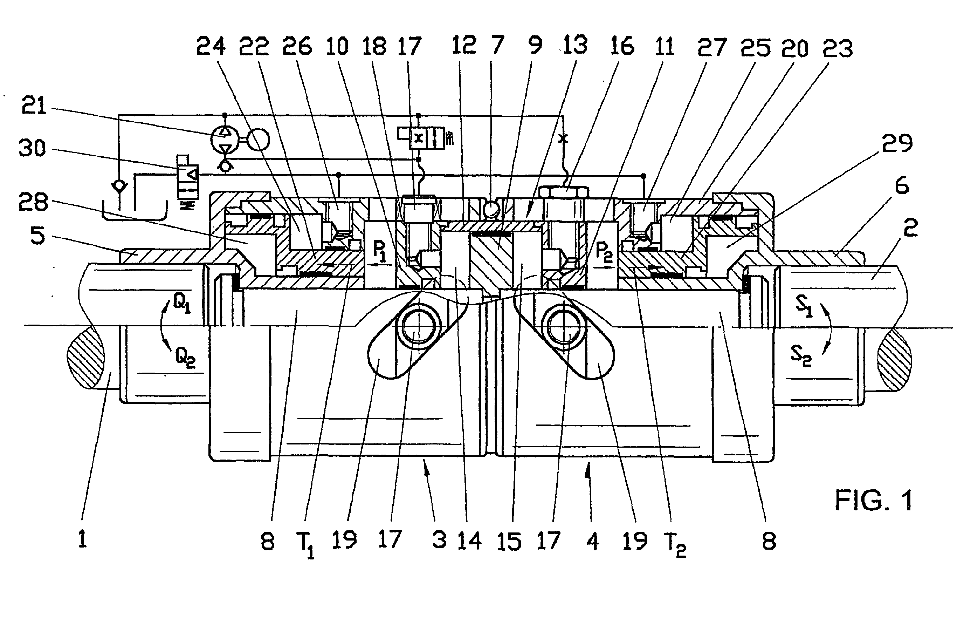

Die in den Figuren 1 bis 3 dargestellte hydraulische Antriebseinheit ist Bestandteil eines Drehantriebes, der zur Verdrehung der Enden zweier Stabüisatorhälften 1, 2 dient. Die Stabilisatorhälften 1, 2 sind Bestandteil eines hier nicht näher dargestellten Kraftfahrzeugachsstabilisators. Die nicht dargestellten anderen Enden der Stabilisatorhälften 1 und 2 sind dabei an der Radaufhängung jeweils eines Rades einer Kraftfahrzeugachse festgelegt und dienen dazu, bei Kurvenfahrten eines Kraftfahrzeuges auf Grund der Querbeschleunigung auftretende Wankbewegungen der Karosserie um die Fahrzeuglängsachse zu vermindern.

Die erfindungsgemäße hydraulische Antriebseinheit ist Bestandteil des Drehantriebes, welcher im Wesentlichen aus zwei gegeneinander verdrehbaren Gehäusehälften 3 und 4 aufgebaut ist, welche jeweils über einen an jeder Gehäusehälfte 3, 4 angeordneten Flansch 5, 6 drehfest mit den Stabilisatorenden 1 und 2 verbunden sind.

In der Mitte zwischen den beiden Gehäusehälften befindet sich ein Axialkugellager 7, welches die Verdrehbewegung der Gehäusehälften 3 und 4 gegeneinander ermöglicht. Die Gehäusehälften 3 und 4 sind dabei über einen zentrischen Gewindezapfen 8 gegeneinander verspannt. Zentral in der Mitte des durch die beiden Gehäusehälften 3 und 4 gebildeten Drehantriebes befindet sich eine feste Trennwand 9, welche im Innern eines durch zwei Seitenwände und einen zylinderförmigen Verbindungssteg 12 gebildeten Betätigungskolben 13 angeordnet ist. Durch die Bauweise des Betätigungskolbens 13 in Verbindung mit der Trennwand 9 werden zwei Kolbenräume 14 und 15 geschaffen, welche durch in den Seitenwänden 10 und 11 befindliche Anschlüsse 16 mit Öldruck beaufschlagbar sind.

In allen Figuren 1 bis 4 ist der Anschluss 16 für den Kolbenraum 15 dargestellt, ein gleichartiger Anschluss für den Kolbenraum 14 befindet sich auf den Figuren nicht sichtbar radial versetzt in der Seitenwand 10 des Betätigungskolbens 13. In den Seitenwänden 10 und 11 befinden sich neben den Anschlüssen 16 für die Ölversorgung über den Umfang verteilt drei über den Umfang der Seitenwände vorstehende Nocken 17, die über den Umfang der zylinderförmigen Seitenwandungen 10 und 11 um 120° verteilt angeordnet sind. Die Nocken 17 sind in ihrem über den Umfang der Seitenwände 10 vorstehenden Bereich mit jeweils einem Nadellager 18 versehen, welche in langlochförmige Durchbrüche 19 in den Außenwandungen der zylinderförmigen Gehäusehälften 3 und 4 ausgespart sind.

Die in den Seitenwandungen 10 und 11 angeordneten Nocken bilden zusammen mit den über den Umfang der Gehäusewandungen 20 verteilten Durchbrüchen 19 ein Kurvengetriebe, welches eine translatorische Bewegung des Betätigungskolbens 13 in Richtung der Pfeile P₁ bzw. P₂ in eine Drehbewegung entsprechend der Pfeile Q₁, Q₂ für die Gehäusehälfte 3 und S₁ bzw. S₂ für die Gehäusehälfte 4 umsetzt.

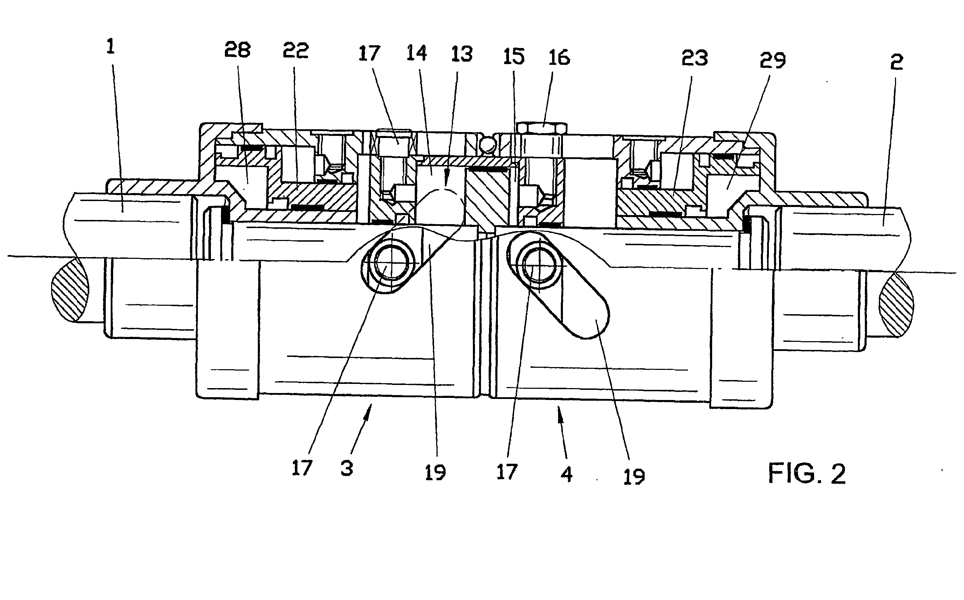

Zur Erläuterung der Wirkungsweise des Drehantriebes wird der Betriebszustand anhand der Figur 2 beschrieben, in dem der Kolbenraum 14 über einen der Anschlüsse 16 durch eine Hydraulikpumpe 21 mit Drucköl beaufschlagt wird. Durch diese Maßnahme vergrößert sich der Kolbenraum 14 und bewirkt eine translatorische Verschiebung des Betätigungskolbens 13 in Richtung des Pfeiles P₁. Durch diese Verschiebung bewegen sich gleichzeitig mit dem Betätigungskolben 13 die in den Seitenwandungen 10 und 11 angeordneten Nocken 17. Da die Gehäusehälften 3 und 4 bzw. die Durchbrüche 19 durch die Nocken 17 zwangsgeführt sind, wird durch die Bewegung des Betätigungskolbens 13 in Richtung des Pfeiles P₁ gleichzeitig eine Verdrehung der Gehäusehälften 3 in Richtung des Pfeiles Q₁ bewirkt, wohingegen die Gehäusehälfte 4 durch die Bewegung des Betätigungskolbens 13 in Richtung des Pfeiles S₂ entgegengesetzt verdreht wird. Somit entspricht die Beaufschlagung des Kolbenraumes 14 mit einer bestimmten Druckölmenge einer entsprechenden Verdrehung der Enden der Stabilisatorhälften 1 und 2 gegeneinander.

Sollte im angeschlossenen Hydraulikkreislauf ein Leitungsbruch auftreten oder sollte die Hydraulikpumpe auf Grund eines Defektes im elektrischen Kraftfahrzeugbordnetz keine Leistung bereitstellen, so entfällt naturgemäß die Druckbeaufschlagung innerhalb des Kolbenraumes 14, so dass eine unkontrollierte Verschiebung des Betätigungskolbens 13 möglich wäre.

Lösung der vorliegenden Erfindung ist es, den geschilderten Drehantrieb so weiter zu entwickeln, dass eine unkontrollierte translatorische Bewegung des Betätigungskolbens 13 im Falle eines Ausfalls der Hydraulik oder der Elektrik des Kraftfahrzeuges ausgeschlossen wird.

Zu diesem Zweck befinden sich innerhalb der Gehäusehälften 3 und 4 jeweils an der den Kolbenräumen 14 und 15 abgewandten Außenseite des Betätigungskolbens je ein gegen eine Federkraft vorspannbarer hydraulisch betätigter Freigabekolben 22 bzw. 23. Die Druckölbeaufschlagung der genannten Freigabekolben 22 bzw. 23 erfolgt auf den zwischen Freigabekolben 22 bzw. 23 und Gehäusewandung definierte Kolbenräume 24 und 25, die über Anschlüsse 26 bzw. 27 von der Hydraulikpumpe 21 mit Drucköl beaufschlagt sind. An der den Kolbenräumen 24 und 25 abgewandten gegenüber liegenden Seite der Freigabekolben 22 und 23 befindet sich jeweils ein Druckluftpolster 28 bzw. 29, welche in der Darstellung der Figuren 1 und 2 auf Grund der durch die Druckölbeaufschlagung der Kolbenräume 24 und 25 erfolgten Verschiebung der Freigabekolben 22 und 23 in Richtung der Pfeile T₁ und T₂ komprimiert sind. Die Komprimierung des in den Druckluftpolsterräumen 28 und 29 enthaltenen Druckmediums ruft eine Federkraft hervor, welche während des normalen Betriebszustandes der hydraulischen Antriebseinheit mit dem innerhalb der Kolbenräume 24 und 25 befindlichen Drucköl im Gleichgewicht steht. Dieser Zustand wird mittels des elektrisch betätigten Sitzventiles 30 aufrechterhalten.

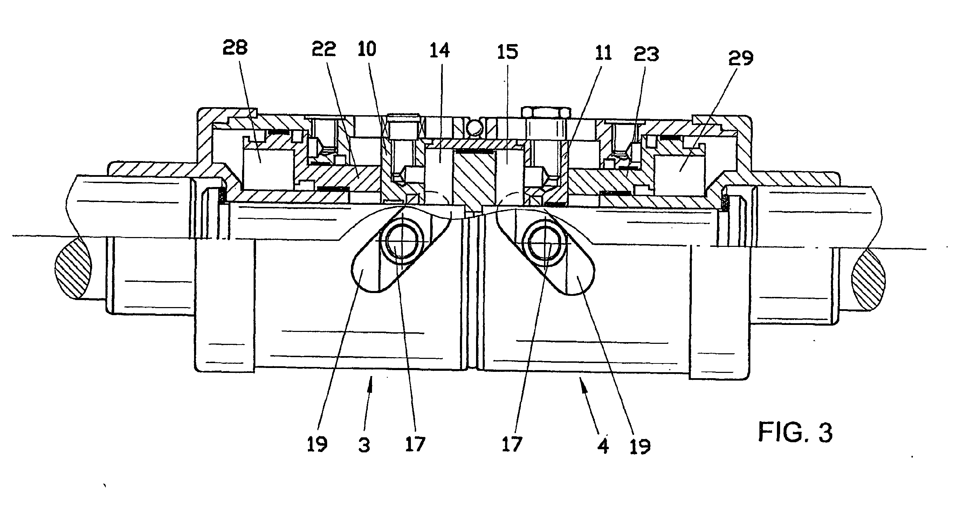

In der Darstellung der Figur 3 ist verdeutlicht, wie sich der in den Figuren 1 und 2 dargestellte Betriebszustand verändert, sobald innerhalb des Hydraulik- oder Elektriknetzes des Kraftfahrzeuges ein Fehler auftritt. Erkennbar ist aus der Figur 3, dass eine fehlende Druckölbeaufschlagung der gesamten Geräteanordnung zum einen - wie bereits eingangs geschildert - eine Verschiebung des Betätigungskolbens 13 ermöglicht und gleichzeitig durch die fehlende Druckölbeaufschlagung der Kolbenräume 24 und 25 eine Verschiebung der Freigabekolben 22 und 23 in Folge der Entspannung der Luft innerhalb der Druckluftpolster 28 und 29 bewirkt wird. Die gespeicherten Federkräfte der Druckluftpolster drücken die Freigabekolben 22 und 23 in Richtung des Betätigungskolbens 13, bis die Stirnfläche der Freigabekolben mit den Außenseiten der Seitenwandungen 10 und 11 des Betätigungskolbens 13 in Berührung kommen. Durch die symmetrische Ausführung der Freigabekolben 22 und 23 wird der Betätigungskolben 13 in die in der Figur 1 dargestellte Mittellage gedrückt, sofern er beispielsweise entsprechend der Figur 2 in Richtung des Pfeiles P₁ verschoben war. Der Betätigungskolben 13 wird sodann in der Mittellage fixiert, so dass eine Neutralstellung der gesamten Achsstabilisatoranordnung gewährleistet ist.

Anzumerken ist in diesem Zusammenhang, dass die Vorspannung der Freigabekolben 22 und 23 bei intaktem Hydraulik- und Elektrikboränetz bei Inbetriebnahme des Fahrzeuges in Folge des Druckölaufbaus der Hydraulikpumpe 21 in den Kolbenräumen 24 und 25 üblicherweise in einem Zeitrahmen von weniger als 1 Sekunde herbeigeführt wird. Danach fixiert das Sitzventil 30 den vorgespannten Zustand der Freigabekolben 22 und 23, so dass das gesamte Achsstabilisatorsystem betriebsbereit ist. Die Betriebsbereitschaft bedeutet, dass die Freigabekolben in der in den Figuren 1 und 2 dargestellten äußeren Position befindlich sind, so dass der Betätigungskolben 13 in Richtung der Pfeile P₁ bzw. P₂ verschieblich ist.

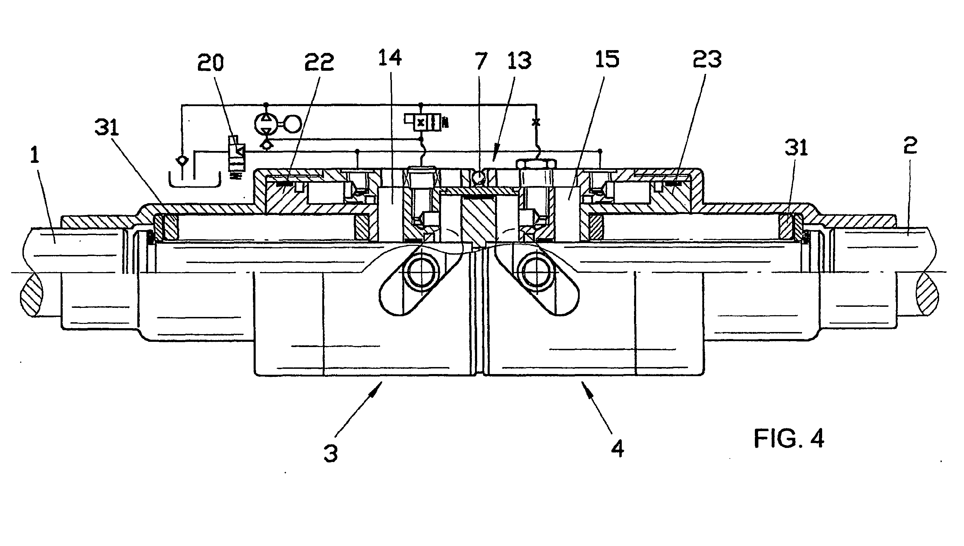

In der Darstellung der Figur 4 ist ergänzend eine weitere Ausführungsvariante des Erfindungsgegenstandes dargestellt, welche sich im Wesentlichen durch die Art der Bereitstellung der Federvorspannung von dem in den Figuren 1 bis 3 beschriebenen Ausführungsbeispiel unterscheidet.

Es wird deshalb auf eine nochmalige Beschreibung der Einzelteile des erfindungsgemäßen Ausführungsbeispieles verzichtet. Wesentlich ist, dass in dem in Figur 4 dargestellten Ausführungsbeispiel die Federvorspannung durch eine Schraubenfeder 31 bereitgestellt ist. Die Darstellung der Figur 4 zeigt den normalen Betriebszustand der hydraulischen Antriebseinheit, bei der sich die Freigabekolben 22 bzw. 23 in der Federvorspannungsposition befinden. In dieser Position besteht für den Betätigungskolben 13 die Möglichkeit einer Verschiebung in Richtung der Enden der Stabilisatorhälften 1 bzw. 2 je nach Druckölbeaufschlagung der Kolbenräume 14 und 15.

Natürlich sind für die Bereitstellung der Federvorspannkräfte auch noch andere Federvarianten, wie beispielsweise Tellerfedern, denkbar. Erfindungswesentlich ist, dass bei einem Ausfall der Hydraulik oder der Elektrik des betreffenden Kraftfahrzeuges durch die Freisetzung der Federvorspannkräfte in Folge der Rückbewegung der Freigabekolben 22 und 23 eine Verschiebung des Betätigungskolbens 13 in seine mittige Neutralposition herbeigeführt wird, wobei gleichzeitig die an den Betätigungskolben 13 mittels der Nocken 19 gekoppelten Gehäusehälften 3 und 4 aus ihrer verdrehten Position in die Neutralposition zurückbewegt werden.

### Bezugszeichenliste

- 1.: Stabilisatorhälfte
- 2.: Stabilisatorhälfte
- 3.: Gehäusehälfte
- 4.: Gehäusehälfte
- 5.: Flansch
- 6.: Flansch
- 7.: Axialkugellager
- 8.: Gewindezapfen
- 9.: Trennwand
- 10.: Seitenwand
- 11.: Seitenwand
- 12.: Verbindungssteg
- 13.: Betätigungskolben
- 14.: Kolbenraum
- 15.: Kolbenraum
- 16.: Anschluss
- 17.: Nocke
- 18.: Nadellager
- 19.: Durchbruch
- 20.: Gehäusewandung
- 21.: Hydraulikpumpe
- 22.: Freigabekolben
- 23.: Freigabekolben
- 24.: Kolbenraum
- 25.: Kolbenraum
- 26.: Anschluss
- 27.: Anschluss
- 28.: Druckluftpolster
- 29.: Druckluftpolster
- 30.: Sitzventil
- 31.: Schraubenfeder

## Patentansprüche

1. Antriebseinheit für die koaxiale Verdrehbewegung zweier Stabilisatorhälften (1,2) eines Kraftfahrzeugachsstabilisators mit einem aus zwei Gehäusehälften (3, 4) bestehenden, rohrförmigen Gehäuse, in dessen Innern ein hydraulisch bewegbarer Betätigungskolben (13) verschieblich zur Gehäuselängsachse angeordnet ist, wobei die Längsverschiebung mittels eines zwischengeschalteten Kurvengetriebes (19, 17) in eine Drehbewegung der Gehäusehälften (3, 4) um ihre gemeinsame Längsachse umgeformt wird und wobei die Gehäusehälften (3, 4) mit ihrem jeweiligen freien, einander abgewandten Ende an jeweils einer Stabilisatorhälfte (1, 2) festgelegt sind,
**dadurch gekennzeichnet, dass**
an den gegenüberliegenden Flachseiten des Betätigungskolbens (13) jeweils gegen ein Federelement (28, 29, 31) in vorgespannter Position die Verschiebebewegung des zentralen Betätigungskolbens (13) ermöglichende und in entspannter Position den Betätigungskolben (13) in seiner Mittenposition festlegende vorspannbare hydraulisch betätigte Freigabekolben (22, 23) angeordnet sind.

2. Antriebseinheit nach Anspruch 1,
**dadurch gekennzeichnet, dass**
die Antriebseinheit eine hydraulische Antriebseinheit ist.

3. Antriebseinheit nach Anspruch 1 oder 2,
**dadurch gekennzeichnet, dass**
die Federkraft zur Vorspannung des Freigabekolbens (22, 23) durch ein als Druckluftpolster (28, 29)ausgebildetes Federelement bereitgestellt ist.

4. Antriebseinheit nach Anspruch 1 oder 2,
**dadurch gekennzeichnet, dass**
die Federkraft zur Vorspannung des Freigabekolbens (22, 23) durch ein als Schraubenfeder (31) ausgebildetes Federelement bereitgestellt ist.

5. Antriebseinheit nach einem der vorstehend genannten Ansprüche,
**dadurch gekennzeichnet, dass**
der Freigabekolben in seiner Vorspannposition durch ein elektrisch betätigtes Sitzventil (20) gehalten ist..

6. Antriebseinheit nach einem der vorstehend genannten Ansprüche,
**dadurch gekennzeichnet, dass**
Freigabekolben (22, 23) und Betätigungskolben (13) konzentrisch zur Längsachse der hydraulischen Antriebseinheit angeordnet sind.

## Claims

1. Drive unit for displacing two stabiliser halves. (1, 2) of a motor vehicle axle stabiliser in a coaxial twisting motion, with a tubular housing comprising two housing halves (3, 4), in the interior of which a hydraulically displaceable actuator piston (13) is disposed so as to be displaceable with respect to the housing longitudinal axis, and the longitudinal displacement is converted into a rotating motion of the two housing halves (3, 4) about their common longitudinal axis by means of an inter-connected cam mechanism (19, 17), and the housing halves (3, 4) are each secured by their mutually remote, respective free ends to a stabiliser half (1, 2),
**characterised in that**
hydraulically actuated releasing pistons (22, 23) are disposed on oppositely lying flat faces of the actuator piston (13), each of which can be biased against a spring element (28, 29, 31) and which respectively permit the displacing motion of the central actuator piston (13) when in the biased position and fix the actuator piston (13) in its middle position when in the released position.

2. Drive unit as claimed in claim 1,
**characterised in that**
the drive unit is a hydraulic drive unit.

3. Drive unit as claimed in claim 1 or 2,
**characterised in that**
the spring force for biasing the releasing piston (22, 23) is generated by means of a spring element in the form of a pneumatic cushion (28, 29).

4. Drive unit as claimed in claim 1 or 2,
**characterised in that**
the spring force for biasing the releasing piston (22, 23) is generated by means of a spring element in the form of a helical spring (31).

5. Drive unit as claimed in one of said preceding claims,
**characterised in that**
the releasing piston is retained in its biased position by means of an electrically actuated seat valve (20).

6. Drive unit as claimed in one of said preceding claims,
**characterised in that**
the releasing pistons (22, 23) and actuator piston (13) are disposed concentrically with the longitudinal axis of the hydraulic drive unit.

## Revendications

1. Unité d'entraînement pour le mouvement de rotation coaxial de deux moitiés de stabilisateur (1, 2) d'un stabilisateur d'essieu de véhicule automobile avec un boîtier de forme tubulaire, constitué de deux moitiés de boîtier (3, 9), à l'intérieur duquel un piston d'actionnement (13), déplaçable de manière hydraulique, est disposé de manière à pouvoir coulisser par rapport à l'axe longitudinal du boîtier, le coulissement longitudinal étant transformé, au moyen d'une transmission à cames (19, 17) intercalée, en un mouvement de rotation des moitiés de boîtier (3, 4) autour de leur axe longitudinal commun, et les moitiés de boîtier (3, 4) étant fixées par leurs extrémités libres respectives, tournées à l'opposé l'une de l'autre, chacune sur une moitié de stabilisateur (1, 2),
**caractérisée en ce que**
sur chacune des faces plates opposées du piston d'actionnement (13), sont disposés des pistons de déverrouillage (22, 23) actionnés de manière hydraulique, pouvant être précontraints à l'encontre d'un élément de ressort (28, 29, 31), autorisant le mouvement de coulissement du piston d'actionnement central (13) dans la position précontrainte, et fixant le piston d'actionnement (13) dans sa position centrale, en position détendue.

2. Unité d'entraînement selon la revendication 1,
**caractérisée en ce que**
l'unité d'entraînement est une unité d'entraînement hydraulique.

3. Unité d'entraînement selon la revendication 1 ou 2,
**caractérisée en ce que**
la force du ressort pour la précontrainte du piston de déverrouillage (22, 23) est fournie par un élément de ressort réalisé sous la forme d'un coussin d'air comprimé (28, 29) .

4. Unité d'entraînement selon la revendication 1 ou 2,
**caractérisée en ce que**
la force du ressort pour la précontrainte du piston de déverrouillage (22, 23) est fournie par un élément de ressort réalisé sous la forme d'un ressort hélicoïdal (31).

5. Unité d'entraînement selon l'une des revendications précédentes,
**caractérisée en ce que**
le piston de déverrouillage est maintenu dans sa position de précontrainte par une soupape à siège (20) actionnée de manière électrique.

6. Unité d'entraînement selon l'une des revendications précédentes,
**caractérisée en ce que**
le piston de déverrouillage (22, 23) et le piston d'actionnement (13) sont disposés concentriquement à l'axe longitudinal de l'unité d'entraînement hydraulique.
